# EUROPEAN PATENT SPECIFICATION

(11) **EP 4 386 549 B1**
(45) Date of publication and mention of the grant of the patent: **25.11.2026**
(21) Application number: 22874396.9
(22) Date of filing: 28.07.2022
(51) Int. Cl.: G06F 9/50, G06F 12/02, G06F 12/08

(54) **MEMORY MANAGEMENT METHOD AND APPARATUS, PROCESSOR AND COMPUTING DEVICE**
SPEICHERVERWALTUNGSVERFAHREN UND -VORRICHTUNG, PROZESSOR UND COMPUTERVORRICHTUNG
PROCÉDÉ ET APPAREIL DE GESTION DE MÉMOIRE, PROCESSEUR ET DISPOSITIF INFORMATIQUE

(30) Priority: 30.09.2021 CN 202111162769
(43) Date of publication of application: 19.06.2024
(73) Proprietor: Huawei Technologies Co., Ltd., Shenzhen, Guangdong 518129 (CN)
(72) Inventor: CHEN, Huan, Shenzhen, Guangdong 518129 (CN); ZHU, Xiaoping, Shenzhen, Guangdong 518129 (CN); HE, Zeyao, Shenzhen, Guangdong 518129 (CN)
(74) Representative: Gill Jennings & Every LLP
(86) International application number: PCT/CN2022/108537
(87) International publication number: WO 2023/051000

(56) References cited:
- WO-A1-2015/180648
- WO-A1-2015/180648
- WO-A1-2021/080785
- CN-A- 102 508 787
- CN-A- 112 513 821
- CN-A- 113 867 947
- US-A1- 2017 344 297

## Description

### TECHNICAL FIELD

This application relates to the field of computer technologies, and in particular, to a memory management method and apparatus, a processor, and a computing device.

### BACKGROUND

With the development of multi-core processors, a quantity of cores of a single processor gradually increases, and a computing speed of the processor continuously increases accordingly. Because a memory access speed and a memory capacity seriously lag behind the computing speed of the processor, a "memory wall" problem becomes more prominent. Currently, multiple types of storage media are disposed in a computer system to improve the memory capacity. However, how the processor uses the multiple types of storage media to enable the memory access speed to maximally satisfy the computing speed of the processor is an urgent problem to be resolved.

WO2021080785A1 discloses examples relating to constructing an allocation of memory in a memory subsystem. In one example, a method includes receiving from a host system among a pool of host systems, a request to construct an allocation of memory, the pool of host systems being coupled to a pool of memory devices, selecting multiple memory devices among the pool of memory devices, selecting multiple memory components among the multiple memory devices, aggregating the multiple memory components to implement the allocation of memory, and providing, to the host system, hierarchical addresses to be used to access the multiple memory components implementing the allocation of memory, the hierarchical addresses each including a device ID of an associated memory device and a host ID of an associated host system.

WO2015180648A1 discloses a resource allocation method and device, which are used for automatically allocating suitable available resources to data of an application, so as to improve the performance of the application. The method comprises: receiving, through an acquisition interface, physical storage resource allocation request information sent by an application; determining whether the physical storage resource allocation request information contains information of a medium type of a physical storage resource applied for; if it is determined that the physical storage resource allocation request information does not contain the information of the medium type of the physical storage resource applied for, searching in a spatial characteristic table acquired in advance a storage medium type matching with the medium information; allocating an available virtual resource to the application according to the size information of the physical storage resource applied for; and allocating, to the application, an available physical storage resource corresponding to the available virtual resource according to the physical storage resource allocation request information and the medium type of the physical storage resource applied for.

### SUMMARY

This application provides a memory management method and apparatus, a processor, and a computing device, so that a memory access speed maximally satisfies a computing speed of the processor.

According to a first aspect, a memory management method as set out in appended claim 1 is provided.

In this way, a memory capacity of a system is expanded by configuring the multiple different types of memory media, so that the first processor can obtain as many memory resources as possible when running an application. In addition, when allocating the memory resource to the running application, the first processor fully considers the physical attributes of the multiple different types of memory media in the system, and selects the to-be-allocated memory resource from the multiple different types of memory media, to ensure that an access latency of accessing the allocated memory resource by the first processor is as low as possible, and an access speed and a memory capacity of the memory medium maximally satisfy a computing speed of the first processor.

Specifically, the determining a to-be-allocated memory resource from the multiple different types of memory media based on an allocation policy includes: determining the memory resource from the multiple different types of memory media based on a memory medium type and the physical attributes of the multiple different types of memory media accessed by the first processor in a computing device. It may be understood that the first processor first selects a type of memory medium from the multiple different types of memory media based on the memory medium type, and then determines the to-be-allocated memory resource based on a physical attribute of the type of memory medium.

For example, the multiple different types of memory media include a first memory medium and a second memory medium, the memory media associated with the first processor include the first memory medium and the second memory medium, and if an access speed of the first memory medium is greater than an access speed of the second memory medium, an access latency of the first memory medium is less than an access latency of the second memory medium. Therefore, the first processor may first select the memory resource from first memory media associated with the multiple processors. If the first memory media associated with the multiple processors are all insufficient to satisfy a requirement of the memory allocation request, the memory resource is selected from second memory media associated with the multiple processors.

In a possible implementation, the determining the memory resource from the multiple different types of memory media based on a memory medium type and the physical attributes of the multiple different types of memory media accessed by the first processor in a computing device includes: determining the memory resource from the first memory media associated with the multiple processors based on physical attributes of the first memory media that are associated with the multiple processors and that are accessed by the first processor.

For example, the determining the memory resource from the first memory media associated with the multiple processors based on physical attributes of the first memory media that are associated with the multiple processors and that are accessed by the first processor includes: determining the first memory medium associated with the first processor as the memory resource based on that an access latency of accessing, by the first processor, the first memory medium associated with the first processor is less than an access latency of accessing, by the first processor, a first memory medium associated with a processor adjacent to the first processor; and if a remaining memory resource of the first memory medium associated with the first processor does not satisfy a memory resource requirement of the memory allocation request, determining the first memory medium associated with the processor adjacent to the first processor as the memory resource.

In another possible implementation, the determining the memory resource from the multiple different types of memory media based on a memory medium type and the physical attributes of the multiple different types of memory media accessed by the first processor in a computing device includes: if remaining storage space of the first memory media associated with the multiple processors is less than a preset memory allocation granularity, determining the memory resource from the second memory media associated with the multiple processors based on physical attributes of the second memory media that are associated with the multiple processors and that are accessed by the first processor.

For example, the determining the memory resource from the second memory media associated with the multiple processors based on physical attributes of the second memory media that are associated with the multiple processors and that are accessed by the first processor includes: determining the second memory medium associated with the first processor as the memory resource based on that an access latency of accessing, by the first processor, the second memory medium associated with the processor is less than an access latency of accessing, by the first processor, a second memory medium associated with a processor adjacent to the first processor; and if a remaining memory resource of the second memory medium associated with the first processor does not satisfy the memory resource requirement of the memory allocation request, determining the second memory medium associated with the processor adjacent to the first processor as the memory resource.

In the first aspect, the allocating the memory resource to a logical address based on the allocation policy includes: allocating the memory resource corresponding to the logical address based on the preset memory allocation granularity. The preset memory allocation granularity is greater than a page size of a memory medium. Compared with the first processor allocating a memory by using a small page 4 KB, this reduces a probability that a miss occurs when the first processor accesses a TLB or a page table, and reduces a large quantity of faults generated when the first processor accesses the memory.

In another possible implementation, the method further includes: releasing the memory resource at the preset memory allocation granularity based on a release instruction. The release instruction instructs to release the memory resource allocated to the application run by the first processor.

In another possible implementation, the first processor is connected to the multiple different types of memory media through interfaces supporting memory semantics, and the interfaces include at least one interface supporting a compute express link (Compute Express Link^{™}, CXL), a cache coherent interconnect for accelerators (Cache Coherent Interconnect for Accelerators, CCIX) protocol, or a unified bus (unified bus, UB, or Ubus).

In another possible implementation, the first memory medium is a dynamic random access memory (dynamic random access memory, DRAM), the second memory medium is a storage-class-memory (storage-class-memory, SCM), and the SCM includes at least one of the following: a phase-change memory (phase-change memory, PCM), a magnetoresistive random access memory (magnetoresistive random access memory, MRAM), a resistive random access memory (resistive random access memory, RRAM/ReRAM), a ferroelectric random access memory (ferroelectric random access memory, FRAM), a fast NAND (fast NAND), or a nano-random access memory (Nano-RAM, NRAM).

In another possible implementation, the hybrid memory system is used in a scenario in which a large-capacity memory is deployed, and the scenario includes at least one of the following: big data, an in-memory database, or a cloud service.

According to a second aspect, a memory management apparatus as set out in appended claim 10 is provided.

According to a third aspect, a computer-readable storage medium as set out in appended claim 13 is provided

Based on the implementations provided in the foregoing aspects, this application may be further combined to provide more implementations.

### BRIEF DESCRIPTION OF DRAWINGS

FIG. 1 is a schematic diagram of a storage system with a three-layer structure according to an embodiment of this application;
FIG. 2 is a schematic diagram of a hybrid memory system according to an embodiment of this application;
FIG. 3 is a schematic flowchart of a memory management method according to an embodiment of this application;
FIG. 4 is a schematic diagram of a structure of a memory management apparatus according to this application;
FIG. 5 is a schematic diagram of a structure of a computing device according to this application; and
FIG. 6 is a schematic diagram of a computer system according to this application.

### DESCRIPTION OF EMBODIMENTS

A memory is a memory device configured to store programs and various data. A larger storage capacity of the memory indicates a slower access speed. On the contrary, a smaller storage capacity indicates a faster access speed. The access speed is a data transmission speed at which data is written to or read from the memory. The access speed may also be referred to as a read/write speed. To improve system performance of a computer system, the memory may be divided into different layers based on storage capacities and access speeds.

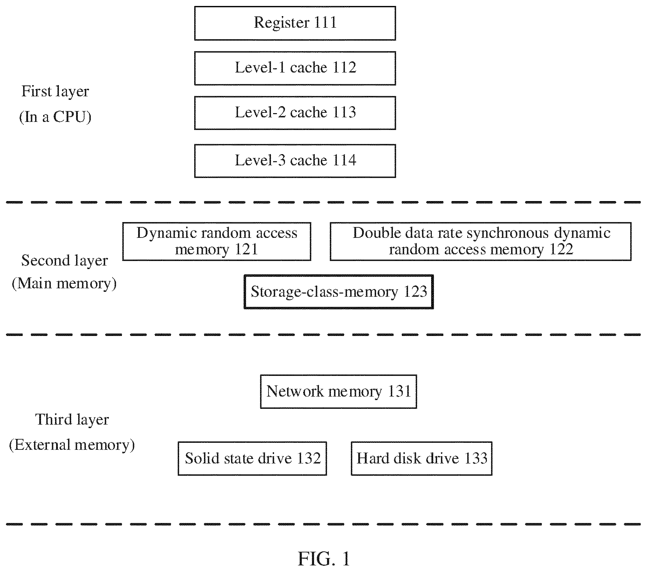

FIG. 1 is a schematic diagram of a storage system with a three-layer structure according to an embodiment of this application. From a first layer to a third layer, a storage capacity increases level by level, an access speed decreases level by level, and costs decrease level by level. As shown in FIG. 1, the first layer includes a register 111, a level-1 cache 112, a level-2 cache 113, and a level-3 cache 114 that are located in a central processing unit (central processing unit, CPU). A memory included in a second layer may be used as a main memory (main memory) of a computer system. For example, a dynamic random access memory 121 and a double data rate synchronous dynamic random access memory (double data rate synchronous DRAM, DDR SDRAM) 122. The main memory may be referred to as a main memory or a memory for short, namely, a memory that exchanges information with the CPU. A memory included in the third layer may be used as a secondary memory of the computer system. For example, a network memory 131, a solid state drive (solid state disk or solid state drive, SSD) 132, and a hard disk drive (hard disk drive, HDD) 133. The secondary memory may be referred to as a secondary memory or an external memory for short. Compared with the main memory, the external memory has a large storage capacity and a slow access speed. It can be learned that a memory closer to the CPU has a smaller storage capacity, a faster access speed, a larger bandwidth, and a smaller access latency. For example, an access latency range of the DRAM 121 may be 50 nanoseconds (nanosecond, ns) to 100 nanoseconds, an access latency range of the network memory 131 may be 1 microsecond (microsecond, µs) to 1000 microseconds, and an access latency range of the solid state drive may be 100 µs. An access latency range of the hard disk drive may be 1 millisecond (millisecond, ms). Therefore, the memory included in the third layer may be used as a back-end storage device. The memory included in the second layer may be used as a cache device, and is configured to store data frequently accessed by the CPU, thereby significantly improving access performance of the system.

With the development of multi-core processors, a quantity of cores of a single processor gradually increases, and a computing speed of the processor continuously increases accordingly. Therefore, the processor has an increasingly high requirement for a memory access speed and a memory capacity. In a possible implementation, multiple different types of storage media are used together as a memory, to improve the memory capacity, and as many memory resources and memory bandwidths as possible are allocated to each processor core from the memory, to satisfy the requirement of the processor for the memory access speed and the memory capacity. A system that uses multiple different types of storage media as a memory may be referred to as a hybrid memory system. A storage medium used as a memory in the hybrid memory system may be referred to as a memory medium. For example, the multiple different types of memory media include a first memory medium and a second memory medium, where a storage capacity of the first memory medium is lower than a storage capacity of the second memory medium, an access speed of the first memory medium is higher than an access speed of the second memory medium, an access latency of the first memory medium is lower than an access latency of the second memory medium, and a cost of the first memory medium is higher than a cost of the second memory medium.

A storage-class-memory (storage-class-memory, SCM) has both advantages of a memory (memory) and features of storage (storage), which is a new type of non-volatile memory medium for simple understanding. The SCM has features of being non-volatile, very short access time, low price per bit, solid state, and no mobile area. Currently, there are many SCM medium technologies, among which phase-change memory (phase-change memory, PCM) is a most prominent and typical medium and one of earliest memory-level memory medium technologies that have been launched. For example, Intel^{®} Optane^{™} Memory (Intel^{®} Optane^{™} Memory) developed based on 3D Xpoint. In addition, the SCM further includes other types such as a magnetoresistive random access memory (magnetoresistive random access memory, MRAM), a resistive random access memory (resistive random access memory, RRAM/ReRAM), a ferroelectric random access memory (ferroelectric random access memory, FRAM), a fast NAND (fast NAND), and a nano-random access memory (Nano-RAM, NRAM).

The SCM may have a storage capacity of hundreds of gigabytes (Gigabyte, GB), and an access latency range of the SCM may be 120 ns to 400 ns. The SCM may be located at the second layer in a hierarchical architecture of the storage system shown in FIG. 1, for example, a storage-class-memory 123. Because the SCM has features of a large storage capacity and a high access speed, the SCM and another storage medium in the second layer may be used together as a memory medium in the hybrid memory system. For example, a DDR and the SCM are used as the memory medium in the hybrid memory system, or the DRAM and the SCM are used as the memory medium in the hybrid memory system.

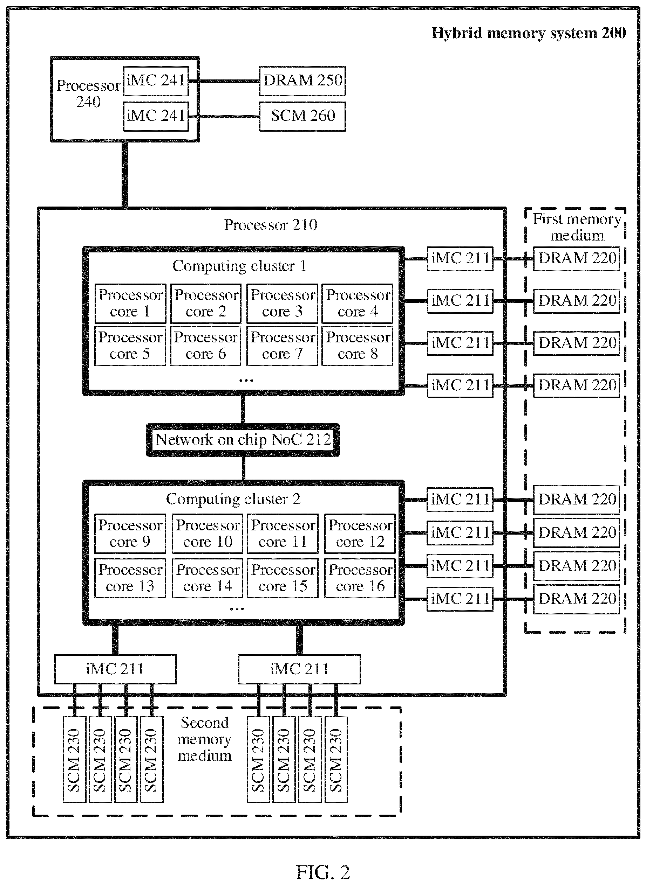

For example, FIG. 2 is a schematic diagram of a hybrid memory system according to an embodiment of this application. As shown in FIG. 2, a hybrid memory system 200 includes multiple processors and multiple different types of memory media. The multiple processors are connected through a quick path interconnect (quick path interconnect, QPI) (or referred to as a common system interface (common system interface, CSI)). Each processor in the multiple processors may be associated with at least one type of memory medium, that is, some processors each are associated with one type of memory medium, and some processors each are associated with more than two types of memory media. For example, the multiple processors include a processor 210 and a processor 240, and the multiple different types of memory media include a first memory medium and a second memory medium. The first memory medium may include a DRAM 220 and a DRAM 250, and the second memory medium may include an SCM 230 and an SCM 260. The processor 210 is connected to the first memory medium and the second memory medium through interfaces supporting memory semantics. The processor 240 is connected to the first memory medium and the second memory medium through interfaces supporting memory semantics. The interface includes at least one interface supporting a compute express link (Compute Express Link^{™}, CXL), a cache coherent Interconnect for Accelerators (Cache Coherent Interconnect for Accelerators, CCIX) protocol, or a unified bus (unified bus, UB, or Ubus). The processor 210 accesses the DRAM 220 as quickly as possible through a parallel interface (for example, the UB) to perform a data read/write operation, thereby improving a data processing speed of the processor 210. The processor 210 is connected to the SCM 230 through a serial interface (for example, the CXL) with a higher rate to expand the memory, so that more memory paths can be expanded, thereby obtaining more memory bandwidths and larger memory capacities, and resolving a matching relationship between a processor core and a memory. In addition, compared with an access latency of accessing, by the processor, the memory connected through the parallel interface, an access latency of accessing, by the processor, the memory connected through the serial interface is larger. A configuration ratio of the memory connected through the serial interface to the memory connected through the parallel interface in the memory is adjusted, to satisfy a requirement of the processor for a memory access speed and a memory capacity.

The processor 210 further includes integrated memory controllers (integrated memory controller, iMC) 211 configured to implement memory management and control and multiple processor cores. The multiple processor cores may be further divided into multiple computing clusters, and each computing cluster includes multiple processor cores. For example, as shown in FIG. 2, a computing cluster 1 includes a processor core 1 to a processor core 8. A computing cluster 2 includes a processor core 9 to a processor core 16. The multiple computing clusters communicate with each other via a network on chip (network on chip, NoC) 212, and the network on chip 212 is configured to implement communication between processor cores in different computing clusters. For a processor of an X86 architecture, the network on chip 212 may be a node controller (node controller, NC). For a processor of an advanced reduced instruction set computing machine (advanced reduced instruction set computing machine, ARM) architecture, the network on chip 212 may be a chip or a logic circuit configured to implement inter-core communication between processors. Each computing cluster is connected to the different types of memory media through multiple integrated memory controllers 211. Optionally, all processor cores in the processor 210 may also be classified into one computing cluster.

It should be noted that the hybrid memory system 200 shown in FIG. 2 is described by using only the processor 210 and the processor 240 as an example. During specific implementation, the hybrid memory system 200 may include two or more processors, and each processor is connected to a different type of memory medium through an iMC.

Optionally, in addition to being integrated into the processor of the hybrid memory system 200 as shown in FIG. 2, the iMC 211 may also be used as an endpoint device (endpoint) in the hybrid memory system 200 in a form of an off-chip chip outside the processor. In this case, the iMC 211 is used as a memory expander.

Optionally, the hybrid memory system 200 is a hybrid memory system. In addition to the first memory medium and the second memory medium, the hybrid memory system 200 may further include another type of memory medium, where the type of memory medium is different from the type of the first memory medium and the type of the second memory medium. For example, at least one of types of memory media such as a random access memory (random access memory, RAM), a static random access memory (static RAM, SRAM), a synchronous dynamic random access memory (synchronous DRAM, SDRAM), and a double data rate synchronous dynamic random access memory (double data rate SDRAM, DDR SDRAM) may further be added in the hybrid memory system 200. In this case, the hybrid memory system 200 includes multiple types of hybrid memory media. For ease of description, the following embodiment of this application is described by using an example in which the hybrid memory system 200 includes only the first memory medium and the second memory medium, the first memory medium is the DRAM, and the second memory medium may be the SCM.

It should be noted that, in an initialization stage, an operating system running on each processor of the hybrid memory system may allocate different levels of memory media to the processor based on types of the memory media, and record a correspondence between the processor and the memory media, to perform a data read or write operation based on the correspondence between the processor and the different levels of memory media.

Each processor may be allocated a memory resource based on a hierarchical memory mechanism, the hierarchical memory mechanism indicates levels of the multiple different types of memory media in the hybrid memory system, and the hybrid memory system includes multiple levels. Specifically, because physical attributes of memory media produced by different manufacturers may be different, the processor may classify the memory media in a multi-level memory system into different levels based on the physical attributes of the memory media, where the physical attributes include at least one of the following: a latency, a cost, a life, and a memory capacity. The processor may classify the memory media in the multi-level memory system into multiple levels based on at least one of the latency, the cost, the life, and the memory capacity, and the multiple levels may be sorted from a first level to a second level, namely, in descending order. For example, an access speed of the DRAM is greater than an access speed of the SCM, and an access latency of the DRAM is less than an access latency of the SCM. Therefore, the DRAM may be used as a memory medium of a first level, and the SCM may be used as a memory medium of a second level, where the first level is higher than the second level.

In addition, memory media of a same type may be classified into one or more levels. For example, memory media of a same type are classified into two or more levels based on at least one of physical attributes. For example, because costs of producing the DRAM by different manufacturers may be different, a low-cost DRAM may be used as a memory medium of a first level, and a high-cost DRAM may be used as a memory medium of a second level.

In a memory management method according to this application, a memory capacity of a system is expanded by configuring multiple different types of memory media, so that a processor can obtain as many memory resources as possible when running an application. In addition, after obtaining a memory allocation request, any processor (for example, a first processor) in the system determines a to-be-allocated memory resource from the multiple different types of memory media based on physical attributes (for example, physical attributes include at least one of the following: a memory capacity, an access latency, a cost, or a service life) of the multiple different types of memory media indicated by an allocation policy, and allocates the memory resource to a logical address based on the allocation policy, to ensure that an access latency of the first processor accessing an allocated memory resource is as low as possible, so that a memory medium access speed and a memory capacity maximally satisfy a computing speed of the processor.

It is assumed that the multiple different types of memory media include a first memory medium and a second memory medium. After obtaining the memory allocation request, the first processor determines, based on a memory medium type, that the first memory medium is a memory medium of a first level, and the second memory medium is a memory medium of a second level. Because the level of the first memory medium is higher than the level of the second memory medium, the first processor first determines the memory resource from first memory media associated with the multiple processors based on physical attributes of the first memory media that are associated with the multiple processors and that are accessed by the first processor. In some embodiments, the first processor may determine a first memory medium associated with the first processor as the memory resource; and if a remaining memory resource of the first memory medium associated with the first processor does not satisfy a memory resource requirement of the memory allocation request, determine a first memory medium associated with a processor adjacent to the first processor as the memory resource. In some other embodiments, if the first memory medium associated with the processor adjacent to the first processor has a low cost or a long service life, the first memory medium associated with the processor adjacent to the first processor may also be preferentially determined as the memory resource.

In some other embodiments, if remaining storage space of the first memory media associated with the multiple processors is less than a preset memory allocation granularity, that is, remaining storage space of all first memory media in the system is insufficient, the first processor then determines the memory resource from second memory media associated with the multiple processors based on physical attributes of the second memory media that are associated with the multiple processors and that are accessed by the first processor. For example, the first processor determines a second memory medium associated with the first processor as the memory resource; and if a remaining memory resource of the second memory medium associated with the first processor does not satisfy the memory resource requirement of the memory allocation request, determines a second memory medium associated with a processor adjacent to the first processor as the memory resource.

Optionally, when allocating the memory resource based on the memory medium type and the physical attribute of the memory medium accessed by the first processor, the first processor may also allocate the memory with reference to an application type. For example, because a latency requirement of a video application is high, when an access latency of accessing, by the first processor, a memory medium associated with the first processor is less than an access latency of accessing, by the first processor, a memory medium associated with a processor adjacent to the first processor, the first processor may preferentially allocate the memory resource from the first processor and the first memory medium associated with the first processor. Because a latency requirement of a text application is low, even if remaining storage space of the first processor and a first memory associated with the first processor is greater than the preset memory allocation granularity, the first processor may also allocate the memory resource from the memory medium associated with the processor adjacent to the first processor, so that the memory resource of the first memory medium associated with the first processor is allocated to an application having a high latency requirement, thereby improving a data processing rate of the first processor, and reducing an access latency of accessing the memory.

Optionally, if the first processor is a graphics processing unit (graphics processing unit, GPU) or a neural network processing unit (neural network processing unit, NPU), because the GPU and the NPU are generally configured to train a neural network, calculation complexity is high, and a calculation amount is large, an SCM may be configured for the GPU and the NPU, to satisfy a requirement of the first processor for processing data on a large memory capacity.

It should be noted that the memory resource allocated by the first processor to an application program based on the memory allocation request is a memory resource of a memory medium accessible to the first processor. The accessible memory medium is a memory medium that is connected to the first processor through a physical bus or another processor or a network, and the first processor may perform a read/write operation on the accessible memory medium. In this embodiment of this application, the memory resource allocated by the first processor to the application program based on the memory allocation request may be memory space corresponding to a physical address in the memory medium, or memory space corresponding to a segment of physical addresses.

For ease of description, the following embodiments are described by using an example in which each type of memory medium is classified into one level. The hybrid memory system includes at least two levels, and the first level and the second level are used as an example for description. For example, the DRAM is used as the memory medium of the first level, and the SCM is used as the memory medium of the second level.

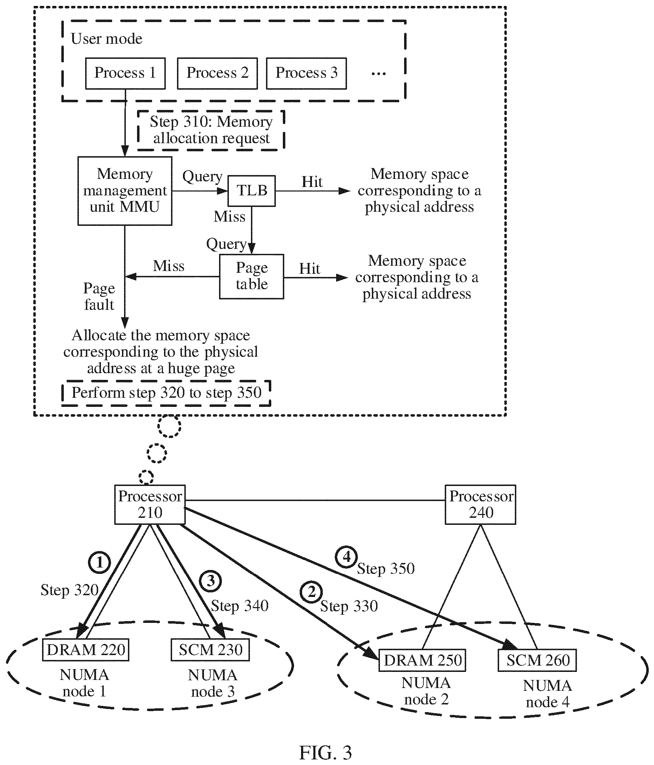

FIG. 3 is a schematic flowchart of a memory management method according to an embodiment of this application. Herein, a hybrid memory system 200 is used as an example for description. It is assumed that a DRAM 220 and a DRAM 250 are used as memory media of a first level. An SCM 230 and an SCM 260 are used as memory media of a second level. A processor 210 is associated with the DRAM 220 and the SCM 230. A processor 240 is associated with the DRAM 250 and the SCM 260. As shown in FIG. 3, the method includes the following steps.

Step 310: The processor 210 obtains a memory allocation request.

The memory allocation request is generated when a memory in a system needs to be accessed in a process that the processor 210 runs an application process in a user mode, and the memory allocation request includes a logical address.

After the processor 210 obtains the memory allocation request, a memory management unit (memory management unit, MMU) in the processor 210 queries a translation look aside buffer (translation look aside buffer, TLB) based on the logical address. The translation look aside buffer is also referred to as a page table buffer, is a high-speed storage unit located in the processor, and stores some page table files (tables, page tables, of translation from a virtual address to a physical address). If the "page table" is stored in a main memory, costs of querying the page table are high, and the TLB located in the memory can improve efficiency of translation from the virtual address to the physical address. If the TLB includes a physical address of a memory medium corresponding to the logical address, it indicates an access hit, and the processor 210 may access the memory medium based on the physical address.

If the TLB does not include the physical address corresponding to the logical address, it indicates that an access miss, and the processor 210 queries the page table based on the logical address. If the page table includes the physical address of the memory medium corresponding to the logical address, it indicates the access hit, and the processor 210 may access the memory medium based on the physical address.

If the page table does not include the physical address corresponding to the logical address, it indicates the access miss, and the processor 210 generates a page fault (page fault), the processor 210 selects, based on a memory medium type and an access latency of accessing a memory medium in the system by the processor 210, one memory medium from different types of memory media, to allocate a memory resource corresponding to the logical address to the application process. It may be understood that, because an access speed of the DRAM is greater than an access speed of the SCM, and an access latency of the DRAM is less than an access latency of the SCM, the processor 210 first allocates the memory resource corresponding to the logical address from the memory medium DRAM of a first level in the system, that is, the processor 210 allocates the memory resource corresponding to the logical address from the DRAM 220 or the DRAM 250 based on an access latency of accessing the DRAM by the processor 210. If both remaining storage space of the DRAM 220 and remaining storage space of the DRAM 250 are insufficient, the processor 210 allocates the memory resource corresponding to the logical address from the memory medium SCM of a second level in the system, that is, the processor 210 allocates the memory resource corresponding to the logical address from the SCM 230 or the SCM 260 based on an access latency of accessing the SCM by the processor 210. In addition, for memory media of a same level, when an access latency of accessing, by the processor 210, a memory medium (the DRAM 220) associated with the processor 210 is less than an access latency of accessing, by the processor 210, a memory medium (the DRAM 250) associated with a processor (for example, the processor 240) adjacent to the processor 210, the processor 210 first allocates the memory resource corresponding to the logical address from the DRAM 220 associated with the processor 210. Therefore, a memory resource of a memory medium with a high access speed is preferentially allocated, and an access latency of accessing the memory by the processor 210 is reduced. For details, refer to the following detailed descriptions of Step 320 to Step 350.

Step 320: The processor 210 allocates the memory resource corresponding to the logical address from the DRAM 220 associated with the processor 210.

For ease of understanding, each processor and/or a memory medium associated with the processor may be referred to as a non-uniform memory access (non-uniform memory access, NUMA) node. The DRAM 220 associated with the processor 210 is referred to as a NUMA node 1, the DRAM 250 associated with the processor 240 is referred to as a NUMA node 2, the SCM 230 associated with the processor 210 is referred to as a NUMA node 3, and the SCM 260 associated with the processor 240 is referred to as a NUMA node 4.

An access latency of accessing, by the processor 210, the memory medium of the NUMA node 1 associated with the processor 210 is less than an access latency of accessing, by the processor 210, the memory medium of the NUMA node 2 associated with the processor 240. Therefore, the memory resource corresponding to the logical address is first allocated from the DRAM 220 associated with the processor 210.

It should be noted that, according to development of the current computer field, memory pages are usually divided into different sizes, for example, 4 KB, 2 MB, and 1 GB. A 4 KB memory page is also referred to as a small page or a small-page memory, and a 2 MB or 1 GB memory page is referred to as a huge page or a huge-page memory. Alternatively, a memory page whose memory page size is greater than a first threshold is referred to as a huge page or a huge-page memory, and a memory page whose memory page size is less than or equal to a second threshold is referred to as a small page or a small-page memory. The first threshold and the second threshold may be the same or may be different. During specific implementation, the first threshold and the second threshold may be configured based on a service requirement.

In a possible implementation, for a large-capacity memory scenario, to improve data processing efficiency, the huge-page memory is usually used for data processing. For example, when allocating a memory based on the memory allocation request, the processor may allocate the memory by using a huge page. Compared with allocating the memory by using a small page 4 KB, this reduces a probability that a miss occurs when the processor accesses the TLB or the page table, and reduces a large quantity of faults generated when the processor accesses the memory.

The processor 210 allocates, by using the huge page, the memory resource corresponding to the logical address from the DRAM 220 associated with the processor 210. If the memory allocation request indicates to request a memory resource corresponding to one logical address, the memory resource corresponding to the logical address may be a memory resource indicated by one physical address on the DRAM 220. For example, the memory resource indicated by one physical address may be a 2 MB memory resource. For another example, the memory resource indicated by one physical address may be a part of memory resources in a huge page of 2 MB. If the memory allocation request indicates to request a memory resource corresponding to a segment of logical addresses, the memory resource corresponding to the segment of logical addresses may be a memory resource indicated by a segment of consecutive physical addresses on the DRAM 220. For example, the memory resource indicated by the segment of physical addresses may be two consecutive huge-page 4 MB memory resources.

If the remaining storage space of the DRAM 220 is less than a preset memory allocation granularity, Step 330 is performed. The preset memory allocation granularity is greater than a page size of the memory medium. For example, the preset memory allocation granularity is 2 MB or 1 GB.

Step 330: The processor 210 allocates the memory resource corresponding to the logical address from the DRAM 250 associated with the processor 240 adjacent to the processor 210.

The processor 210 allocates, by using the huge page, the memory resource corresponding to the logical address from the DRAM 250 associated with the processor 240. If the remaining storage space of the DRAM 250 is less than the preset memory allocation granularity, Step 340 is performed.

Step 340: Allocate the memory resource corresponding to the logical address from the SCM 230 associated with the processor 210.

An access latency of accessing, by the processor 210, the memory of the NUMA node 3 associated with the processor 210 is less than an access latency of accessing, by the processor 210, the memory medium of the NUMA node 4 associated with the processor 240 adjacent to the processor 210. Therefore, the memory resource corresponding to the logical address is first allocated from the SCM 230 associated with the processor 210. The processor 210 allocates, by using the huge page, the memory resource corresponding to the logical address from the SCM 230 associated with the processor 210. If the remaining storage space of the SCM 230 is less than the preset memory allocation granularity, Step 350 is performed.

Step 350: Allocate the memory resource corresponding to the logical address from the SCM 260 associated with the processor 240 adjacent to the processor 210.

Optionally, when allocating the memory based on the memory medium type and the access latency of accessing the memory medium by the processor 210, the processor 210 may also allocate the memory with reference to an application type. For example, because a latency requirement of a video application is high, the processor 210 may preferentially allocate a memory from the processor 210 and a memory (the DRAM 220) of the NUMA node 1 associated with the processor 210. Because a latency requirement of a text application is low, even if remaining storage space of the processor 210 and the memory (the DRAM 220) of the NUMA node 1 associated with the processor 210 is greater than the preset memory allocation granularity, the processor 210 may allocate a memory from the DRAM 250 associated with the processor 240 adjacent to the processor 210, so that the memory resource of the DRAM 220 associated with the processor 210 is allocated to an application having a high latency requirement, thereby improving a data processing rate of the processor 210, and reducing an access latency of accessing the memory. On the premise that performance is not affected, a low-cost large-capacity SCM and a low-latency DRAM are used as a hybrid memory medium combination to store different data in a hierarchical manner, thereby reducing hardware costs of the system.

In some other embodiments, the processor may release the memory resource at the preset memory allocation granularity based on a release instruction. The release instruction instructs to release a memory resource allocated to an application run by the processor. For example, for a large kernel page, a Balloon module is added to a virtual machine, the Balloon module is configured to receive an idle page notification of the application, the Balloon module notifies a Backend located in a Qemu, and the QEMU records, based on the huge page, a part that has been currently released. A huge page is released by releasing all 4 KB pages in the huge page. Therefore, in comparison with that a memory is divided into huge-page resources by using a huge page in advance before an application uses a memory resource, and a processor uses a statically allocated huge-page resource, in this application, the processor dynamically allocates a memory resource to a running application based on physical attributes of multiple different types of memory media, thereby ensuring that a state of a system after initial memory allocation is completed is a state of optimal memory performance, and reducing an impact on application performance. In addition, the processor releases, based on the release instruction, the memory resource allocated to the running application based on the physical attributes of the multiple different types of memory media, so that the memory resource can be used by another application, thereby improving utilization of the memory resource.

The hybrid memory system described in this application may be applied to a scenario in which a large-capacity memory is deployed. For example, a scenario in which the large-capacity memory needs to be deployed, for example, big data (for example, Apache Spark^{™}), an in-memory database (for example, Redis), or a cloud service (for example, a virtual machine provided by using a memory overcommitment mechanism in a cloud infrastructure).

It may be understood that, to implement functions in the foregoing embodiments, the hybrid memory system includes a corresponding hardware structure and/or software module for performing each function. A person skilled in the art should be easily aware that, based on the units and the method steps in the examples described in embodiments disclosed in this application, this application can be implemented through hardware or a combination of hardware and computer software. Whether a function is executed through hardware or hardware driven by computer software depends on particular application scenarios and design constraint conditions of the technical solutions.

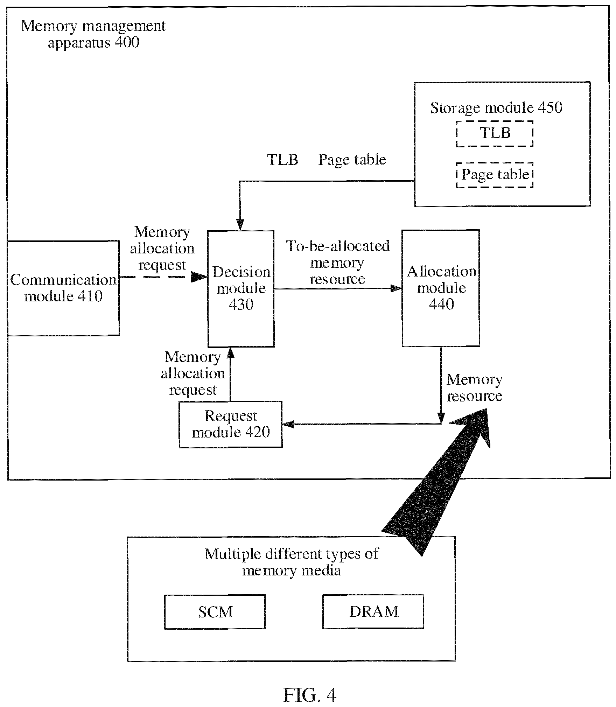

The foregoing describes in detail the memory management method according to embodiments with reference to FIG. 1 to FIG. 3. A memory management apparatus according to an embodiment is described below with reference to FIG. 4.

FIG. 4 is a schematic diagram of a structure of a possible memory management apparatus according to an embodiment. These memory management apparatuses may be configured to implement a function of the first processor in the foregoing method embodiments, and therefore can also achieve beneficial effects of the foregoing method embodiments. In this embodiment, the memory management apparatus may be the processor 210 shown in FIG. 3, or may be a module (for example, a chip) used in a server.

As shown in FIG. 4, a memory management apparatus 400 includes a communication module 410, a request module 420, a decision module 430, an allocation module 440, and a storage module 450. The memory management apparatus 400 is configured to implement a function of the processor 210 in the method embodiment shown in FIG. 3.

The communication module 410 is configured to communicate with another device, for example, receive a memory allocation request sent by another device. The request module 420 is configured to obtain a memory allocation request, where the memory allocation request includes a logical address. For example, the request module 420 is configured to perform Step 310 in FIG. 3. The decision module 430 is configured to determine a to-be-allocated memory resource from multiple different types of memory media based on an allocation policy, where the allocation policy indicates to determine the memory resource based on physical attributes of the multiple different types of memory media, and the physical attributes include at least one of an access latency, a cost, or a service life. The allocation module 440 is configured to allocate the memory resource to the logical address based on the allocation policy. For example, the decision module 430 and the allocation module 440 are configured to perform Step 320 to Step 350 in FIG. 3. Optionally, the decision module 430 is specifically configured to determine the memory resource from the multiple different types of memory media based on a memory medium type and the physical attributes of the multiple different types of memory media accessed by a first processor.

The storage module 450 may correspond to the foregoing method embodiment and is configured to store a correspondence between the logical address and a physical address of a memory medium, for example, a TLB or a page table.

It should be understood that the memory management apparatus 400 in this embodiment of this application may be implemented by using a graphics processing unit (graphics processing unit, GPU), a neural network processing unit (neural network processing unit, NPU), an application-specific integrated circuit (application-specific integrated circuit, ASIC), or a programmable logic device (programmable logic device, PLD). The PLD may be a complex programmable logical device (complex programmable logical device, CPLD), a field-programmable gate array (field-programmable gate array, FPGA), a generic array logic (generic array logic, GAL), or any combination thereof. When the memory management method shown in FIG. 3 may also be implemented by using software, the memory management device 400 and each module thereof may also be software modules.

The memory management apparatus 400 according to this embodiment of this application may correspondingly perform the method described in embodiments of this application, and the foregoing and other operations and/or functions of units in the memory management apparatus 400 are separately for implementing the corresponding procedures of the methods in FIG. 3. For brevity, details are not described herein again.

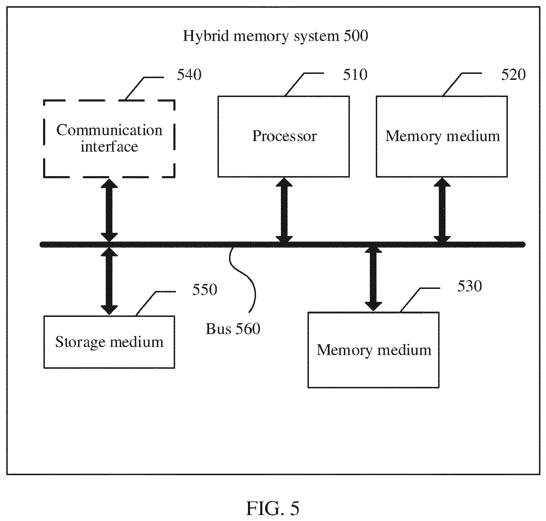

FIG. 5 is a schematic diagram of a hybrid memory system 500 according to an embodiment of this application. As shown in the figure, the hybrid memory system 500 includes a processor 510, multiple different types of memory media (for example, a memory medium 520 and a memory medium 530), a communication interface 540, a storage medium 550, and a bus 560. The processor 510, the memory medium 520, the memory medium 530, the communication interface 540, and the storage medium 550 communicate with each other through the bus 560, or may implement communication by wireless transmission or by another means. The multiple types of memory media (for example, the memory medium 520) may be configured to store computer executable instructions, and the processor 510 is configured to execute the computer executable instructions stored in the memory medium 520. The memory medium 520 stores the computer executable instructions, and the processor 510 may invoke the computer executable instructions stored in the memory medium 520 to perform the following operations: obtaining a memory allocation request, where the memory allocation request includes a logical address; determining a to-be-allocated memory resource from multiple different types of memory media based on an allocation policy, where the allocation policy indicates to determine the memory resource based on physical attributes of the multiple different types of memory media, and the physical attributes include at least one of the following: a memory capacity, an access latency, a cost, or a service life; and allocating the memory resource to the logical address based on the allocation policy.

It should be understood that, in this embodiment of this application, the processor 510 may be a CPU, for example, a processor of an X56 architecture or a processor of an ARM architecture. The processor 510 may also be another general-purpose processor, a digital signal processor (digital signal processor, DSP), an application specific integrated circuit (ASIC), a field programmable gate array (FPGA), another programmable logic device, a discrete gate, a transistor logic device, a discrete hardware component, a system on chip (system on chip, SoC), a graphic processing unit (graphic processing unit, GPU), an artificial intelligence (artificial intelligent, AI) chip, or the like. The general-purpose processor may be a microprocessor, any conventional processor, or the like.

The memory medium 520 may include a read-only memory and a random access memory, and provide instructions and data to the processor 510. The memory medium 520 may further include a non-volatile random access memory. The memory medium 520 may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through illustrative but not limited description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). Optionally, the memory medium 520 may further be a storage-class-memory SCM, and the SCM includes at least one of the following: a phase-change memory PCM, a magnetoresistive random access memory MRAM, a resistive random access memory RRAM, a ferroelectric random access memory FRAM, a fast NAND, or a nano-random access memory NRAM.

A type of the memory medium 530 is similar to a type of the memory medium 520, and may also be any one of the foregoing various memory medium types. However, in the hybrid memory system 500, the type of the memory medium 520 is different from the type of the memory medium 530.

In addition to a data bus, the bus 560 may further include a power bus, a control bus, a state signal bus, and the like. However, for the purpose of clear descriptions, various buses are all marked as the bus 560 in the figure. The bus 560 may be a peripheral component interconnect express (Peripheral Component Interconnect Express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX) protocol, or the like. The bus 560 may be classified into an address bus, a data bus, a control bus, and the like.

It should be noted that, although one processor 510 is used as an example in the hybrid memory system 500 shown in FIG. 5, during specific implementation, the hybrid memory system 500 may include multiple processors, and a quantity of processor cores included in each processor is not limited. In addition, in FIG. 5, only that the system includes two different types of memory media is used as an example. During specific implementation, more memory media may be included, and the types of the memory media are different, to implement hierarchical storage of data in the hybrid memory system based on the physical attributes of the different types of memory media.

It should be understood that the hybrid memory system 500 according to this embodiment of this application may correspond to the memory management apparatus 400 in embodiments of this application, and may correspond to a corresponding body in the method according to embodiments of this application. In addition, the foregoing and other operations and/or functions of the modules in the hybrid memory system 500 are separately for implementing the corresponding procedures of the methods in FIG. 3. For brevity, details are not described herein again.

This application further provides a processor. The processor includes an integrated circuit, the integrated circuit is connected to multiple different types of memory media, and the integrated circuit is configured to implement functions of the operation steps in the method shown in FIG. 3. For brevity, details are not described herein again.

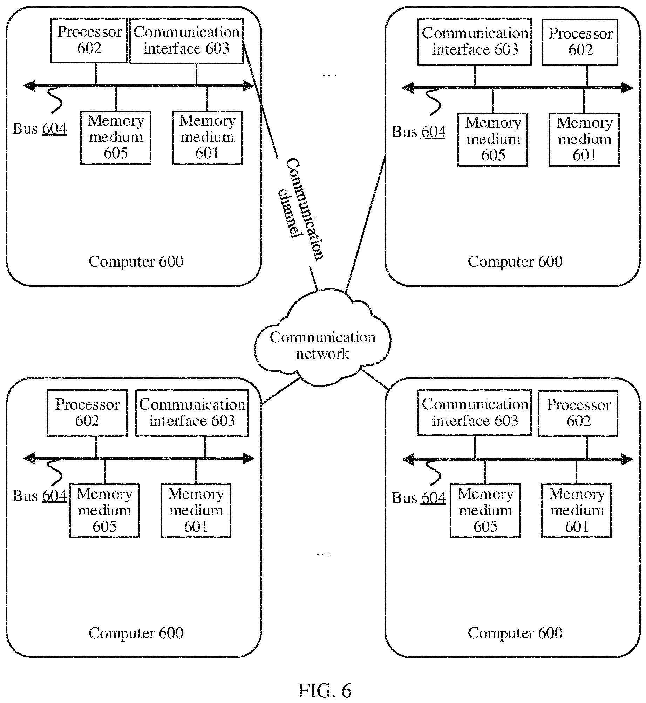

Because the modules in the memory management apparatus 400 provided in this application may be deployed on multiple computers in a same environment or different environments in a distributed manner, this application further provides a computer system shown in FIG. 6. The computer system includes multiple computers 600, and each computer 600 includes a memory medium 601, a processor 602, a communication interface 603, a bus 604, and a memory medium 605. The memory medium 601, the processor 602, and the communication interface 603 implement a mutual communication connection through the bus 604.

The memory medium 601 may be a combination of at least two of the following: a read-only memory, a static storage device, a dynamic storage device, a random access memory, or a storage-class-memory. For example, the memory medium includes a DRAM and an SCM. The memory medium 601 may store computer instructions. When the computer instructions stored in the memory medium 601 are executed by the processor 602, the processor 602 and the communication interface 603 are configured to perform a memory management method of a software system. The memory medium may further store a data set. For example, some storage resources in the memory medium 601 are classified into an area, configured to store a page table and a program for implementing a memory management function in this embodiment of this application.

A type of the memory medium 605 is similar to a type of the memory medium 601, and may also be any one of the foregoing various memory medium types. However, in the computer 600, the type of the memory medium 605 is different from the type of the memory medium 601.

The processor 602 may use a general-purpose CPU, an application specific integrated circuit (application specific integrated circuit, ASIC), a GPU, or any combination thereof. The processor 602 may include one or more chips. The processor 602 may include an AI accelerator, for example, an NPU.

The communication interface 603 uses a transceiver module such as but not limited to a transceiver, to implement communication between the computer 600 and another device or a communication network. For example, a memory allocation request may be obtained through the communication interface 603.

The bus 604 may include a channel for transmitting information between components (for example, the memory medium 601, the memory medium 605, the processor 602, and the communication interface 603) of the computer 600.

A communication channel is established between the foregoing computers 600 through the communication network. Any one or more of the request module 420, the decision module 430, and the allocation module 440 are run on each computer 600. Any computer 600 may be a computer (for example, a server) in a cloud data center, a computer in an edge data center, or a terminal computing device. Functions of a database, big data, a cloud service, or the like may be deployed on each computer 600. For example, the GPU is configured to implement a function of training a neural network.

The method steps in this embodiment may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be located in the ASIC. In addition, the ASIC may be located in a terminal device. Certainly, the processor and the storage medium may exist in a network device or the terminal device as discrete components.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, a computer, a server, or a data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid state drive (solid state drive, SSD). The foregoing descriptions are merely specific implementations of this application, but are not intended to limit the protection scope of this application. Any modification or replacement readily conceived by a person skilled in the art within the technical scope disclosed in this application shall fall within the protection scope of this application. Therefore, the protection scope of this application shall be subject to the protection scope of the claims.

## Claims

1. A memory management method, wherein a hybrid memory system (200) comprises multiple processors (210, 240) and multiple different types of memory media (220, 230, 250, 260), a first processor is associated with at least two different types of memory media, the first processor is any processor in the multiple processors, and the method is performed by the first processor and comprises:
obtaining a memory allocation request, wherein the memory allocation request comprises a logical address;
determining a to-be-allocated memory resource from the multiple different types of memory media based on an allocation policy, wherein the allocation policy indicates to determine the memory resource based on physical attributes of the multiple different types of memory media, and the physical attribute comprises at least one of the following: a memory capacity, an access latency, a cost, or a service life; and
allocating the memory resource to the logical address based on the allocation policy;
the method **characterised in that** the allocating the memory resource to the logical address based on the allocation policy comprises:
allocating the memory resource corresponding to the logical address based on a preset memory allocation granularity, wherein the preset memory allocation granularity is greater than a page size of a memory medium.

2. The method according to claim 1, wherein the determining a to-be-allocated memory resource from the multiple different types of memory media (220, 230, 250, 260) based on an allocation policy comprises:
determining the memory resource from the multiple different types of memory media based on a memory medium type and the physical attributes of the multiple different types of memory media accessed by the first processor.

3. The method according to claim 2, wherein the multiple different types of memory media (220, 230, 250, 260) comprise a first memory medium and a second memory medium, the memory media associated with the first processor comprise the first memory medium and the second memory medium, and if an access speed of the first memory medium is greater than an access speed of the second memory medium, an access latency of the first memory medium is less than an access latency of the second memory medium; and
the determining the memory resource from the multiple different types of memory media based on a memory medium type and the physical attributes of the multiple different types of memory media accessed by the first processor comprises:
determining the memory resource from first memory media associated with the multiple processors based on physical attributes of the first memory media that are associated with the multiple processors and that are accessed by the first processor.

4. The method according to claim 3, wherein the determining the memory resource from first memory media associated with the multiple processors (210, 240) based on physical attributes of the first memory media that are associated with the multiple processors and that are accessed by the first processor comprises:
determining the first memory medium associated with the first processor as the memory resource; and
if a remaining memory resource of the first memory medium associated with the first processor does not satisfy a memory resource requirement of the memory allocation request, determining a first memory medium associated with a processor adjacent to the first processor as the memory resource.

5. The method according to any one of claims 2 to 4, wherein the determining the memory resource from the multiple different types of memory media (220, 230, 250, 260) based on a memory medium type and the physical attributes of the multiple different types of memory media accessed by the first processor comprises:
if remaining storage space of the first memory media associated with the multiple processors is less than a preset memory allocation granularity, determining the memory resource from second memory media associated with the multiple processors based on physical attributes of the second memory media that are associated with the multiple processors and that are accessed by the first processor.

6. The method according to claim 5, wherein the determining the memory resource from second memory media associated with the multiple processors (210, 240) based on physical attributes of the second memory media that are associated with the multiple processors and that are accessed by the first processor comprises:
determining the second memory medium associated with the first processor as the memory resource; and
if a remaining memory resource of the second memory medium associated with the first processor does not satisfy the memory resource requirement of the memory allocation request, determining a second memory medium associated with a processor adjacent to the first processor as the memory resource.

7. The method according to any one of claims 3 to 6, wherein the first memory medium is a dynamic random access memory, DRAM (121), the second memory medium is a storage-class-memory, SCM (123), and the SCM comprises at least one of the following: a phase-change memory PCM, a magnetoresistive random access memory, MRAM, a resistive random access memory, RRAM, a ferroelectric random access memory, FRAM, a fast NAND, or a nano-random access memory, NRAM.

8. The method according to any one of claims 1 to 7, wherein the method further comprises:
releasing the memory resource at the preset memory allocation granularity based on a release instruction, wherein the release instruction instructs to release the memory resource allocated to an application run by the first processor.

9. The method according to any one of claims 1 to 8, wherein the first processor is connected to the multiple different types of memory media (220, 230, 250, 260) through interfaces supporting memory semantics, and the interfaces comprise at least one interface supporting a compute express link, CXL, a cache coherent interconnect for accelerators, CCIX, protocol, or a unified bus, UB.

10. A memory management apparatus (400), wherein a hybrid memory system (200) comprises multiple different types of memory media (220, 230, 250, 260), and the apparatus comprises:
a request module (420), configured to obtain a memory allocation request, wherein the memory allocation request comprises a logical address;
a decision module (430), configured to determine a to-be-allocated memory resource from the multiple different types of memory media based on an allocation policy, wherein the allocation policy indicates to determine the memory resource based on physical attributes of the multiple different types of memory media, and the physical attribute comprises at least one of the following: a memory capacity, an access latency, a cost, or a service life; and
an allocation module (440), configured to allocate the memory resource to the logical address based on the allocation policy;
the apparatus **characterised in that** the allocation module is further configured to allocate the memory resource to the logical address based on a preset memory allocation granularity, wherein the preset memory allocation granularity is greater than a page size of a memory medium.

11. The apparatus (400) according to claim 10, wherein when determining the to-be-allocated memory resource from the multiple different types of memory media (220, 230, 250, 260) based on the allocation policy, the decision module (430) is specifically configured to:
determine the memory resource from the multiple different types of memory media based on a memory medium type and the physical attributes of the multiple different types of memory media that are accessed.

12. The apparatus according to claim 11, wherein the multiple different types of memory media (220, 230, 250, 260) comprise a first memory medium and a second memory medium, and if an access speed of the first memory medium is greater than an access speed of the second memory medium, an access latency of the first memory medium is less than an access latency of the second memory medium; and
when determining the memory resource from the multiple different types of memory media based on the memory medium type and the physical attributes of the multiple different types of memory media that are accessed, the decision module (430) is specifically configured to:
determine the memory resource from multiple first memory media based on physical attributes of the multiple first memory media that are accessed.

13. A computer-readable storage medium (550) storing instructions which, when executed by a computing device comprising a memory and a processor associated with multiple different types of memory media (220, 230, 250, 260), cause the computing device to perform the method according to any one of claims 1 to 9.

## Patentansprüche

1. Speicherverwaltungsverfahren, wobei ein hybrides Speichersystem (200) mehrere Prozessoren (210, 240) und mehrere verschiedene Arten von Speichermedien (220, 230, 250, 260) umfasst, ein erster Prozessor mindestens zwei verschiedenen Arten von Speichermedien zugeordnet ist, der erste Prozessor ein beliebiger Prozessor in den mehreren Prozessoren ist, und das Verfahren durch den ersten Prozessor durchgeführt wird und umfasst:
Erhalten einer Speicherzuweisungsanfrage, wobei die Speicherzuweisungsanfrage eine logische Adresse umfasst;
Bestimmen einer zuzuweisenden Speicherressource aus den mehreren verschiedenen Arten von Speichermedien basierend auf einer Zuweisungsrichtlinie, wobei die Zuweisungsrichtlinie angibt, die Speicherressource basierend auf physischen Attributen der mehreren verschiedenen Arten von Speichermedien zu bestimmen, und das physische Attribut mindestens eines der Folgenden umfasst:
eine Speicherkapazität, eine Zugriffslatenz, einen Preis oder eine Lebensdauer; und
Zuweisen der Speicherressource zu der logischen Adresse basierend auf der Zuweisungsrichtlinie;
wobei das Verfahren **dadurch gekennzeichnet ist, dass** das Zuweisen der Speicherressource zu der logischen Adresse basierend auf der Zuweisungsrichtlinie umfasst:
Zuweisen der Speicherressource entsprechend der logischen Adresse basierend auf einer voreingestellten Speicherzuweisungsgranularität, wobei die voreingestellte Speicherzuweisungsgranularität größer als eine Seitengröße eines Speichermediums ist.

2. Verfahren nach Anspruch 1, wobei das Bestimmen einer zuzuweisenden Speicherressource aus den mehreren verschiedenen Arten von Speichermedien (220, 230, 250, 260) basierend auf einer Zuweisungsrichtlinie umfasst:
Bestimmen der Speicherressource aus den mehreren verschiedenen Arten von Speichermedien basierend auf einer Speichermedienart und den physischen Attributen der mehreren verschiedenen Arten von Speichermedien, auf die durch den ersten Prozessor zugegriffen wird.

3. Verfahren nach Anspruch 2, wobei die mehreren verschiedenen Arten von Speichermedien (220, 230, 250, 260) ein erstes Speichermedium und ein zweites Speichermedium umfassen, die Speichermedien, die dem ersten Prozessor zugeordnet sind, das erste Speichermedium und das zweite Speichermedium umfassen, und falls eine Zugriffsgeschwindigkeit des ersten Speichermediums größer als eine Zugriffsgeschwindigkeit des zweiten Speichermediums ist, eine Zugriffslatenz des ersten Speichermediums geringer als eine Zugriffslatenz des zweiten Speichermediums ist; und das Bestimmen der Speicherressource aus den mehreren verschiedenen Arten von Speichermedien basierend auf einer Speichermedienart und den physischen Attributen der mehreren verschiedenen Arten von Speichermedien, auf die durch den ersten Prozessor zugegriffen wird, umfasst:
Bestimmen der Speicherressource aus ersten Speichermedien, die den mehreren Prozessoren zugeordnet sind, basierend auf physischen Attributen der ersten Speichermedien, die den mehreren Prozessoren zugeordnet sind und auf die durch den ersten Prozessor zugegriffen wird.

4. Verfahren nach Anspruch 3, wobei das Bestimmen der Speicherressource aus ersten Speichermedien, die den mehreren Prozessoren (210, 240) zugeordnet sind, basierend auf physischen Attributen der ersten Speichermedien, die den mehreren Prozessoren zugeordnet sind und auf die durch den ersten Prozessor zugegriffen wird, umfasst:
Bestimmen des ersten Speichermediums, das dem ersten Prozessor zugeordnet ist, als die Speicherressource; und
falls eine verbleibende Speicherressource des ersten Speichermediums, das dem ersten Prozessor zugeordnet ist, eine Speicherressourcenanforderung der Speicherzuweisungsanfrage nicht erfüllt, Bestimmen eines ersten Speichermediums, das einem dem ersten Prozessor benachbarten Prozessor zugeordnet ist, als die Speicherressource.

5. Verfahren nach einem der Ansprüche 2 bis 4, wobei das Bestimmen der Speicherressource aus den mehreren verschiedenen Arten von Speichermedien (220, 230, 250, 260) basierend auf einer Speichermedienart und den physischen Attributen der mehreren verschiedenen Arten von Speichermedien, auf die durch den ersten Prozessor zugegriffen wird, umfasst:
falls ein verbleibender Speicherungsplatz der ersten Speichermedien, die den mehreren Prozessoren zugeordnet sind, kleiner als eine voreingestellte Speicherzuweisungsgranularität ist, Bestimmen der Speicherressource aus zweiten Speichermedien, die den mehreren Prozessoren zugeordnet sind, basierend auf physischen Attributen der zweiten Speichermedien, die den mehreren Prozessoren zugeordnet sind und auf die durch den ersten Prozessor zugegriffen wird.

6. Verfahren nach Anspruch 5, wobei das Bestimmen der Speicherressource aus zweiten Speichermedien, die den mehreren Prozessoren (210, 240) zugeordnet sind, basierend auf physischen Attributen der zweiten Speichermedien, die den mehreren Prozessoren zugeordnet sind und auf die durch den ersten Prozessor zugegriffen wird, umfasst:
Bestimmen des zweiten Speichermediums, das dem ersten Prozessor zugeordnet ist, als die Speicherressource; und
falls eine verbleibende Speicherressource des zweiten Speichermediums, das dem ersten Prozessor zugeordnet ist, die Speicherressourcenanforderung der Speicherzuweisungsanfrage nicht erfüllt, Bestimmen eines zweiten Speichermediums, das einem dem ersten Prozessor benachbarten Prozessor zugeordnet ist, als die Speicherressource.

7. Verfahren nach einem der Ansprüche 3 bis 6, wobei das erste Speichermedium ein dynamischer Direktzugriffsspeicher, DRAM (121), ist, das zweite Speichermedium ein Speicherungsklassenspeicher, SCM (123), ist und der SCM mindestens eines der Folgenden umfasst: einen Phasenwechselspeicher, PCM, einen magnetoresistiven Direktzugriffsspeicher, MRAM, einen resistiven Direktzugriffsspeicher, RRAM, einen ferroelektrischen Direktzugriffsspeicher, FRAM, einen schnellen NAND oder einen Nano-Direktzugriffsspeicher, NRAM.

8. Verfahren nach einem der Ansprüche 1 bis 7, wobei das Verfahren ferner umfasst: Freigeben der Speicherressource mit der voreingestellten Speicherzuweisungsgranularität basierend auf einer Freigabeanweisung, wobei die Freigabeanweisung anweist, die Speicherressource freizugeben, die einer Anwendung, die durch den ersten Prozessor ausgeführt wird, zugewiesen ist.

9. Verfahren nach einem der Ansprüche 1 bis 8, wobei der erste Prozessor über Schnittstellen, die Speichersemantik unterstützen, mit den mehreren verschiedenen Arten von Speichermedien (220, 230, 250, 260) verbunden ist und die Schnittstellen mindestens eine Schnittstelle umfassen, die ein Compute-Express-Link, CXL, ein Cache-Coherent-Interconnect-for-Accelerators(CCIX)-Protokoll oder einen einheitlichen Bus, UB, unterstützt.

10. Speicherverwaltungseinrichtung (400), wobei ein hybrides Speichersystem (200) mehrere verschiedene Arten von Speichermedien (220, 230, 250, 260) umfasst, und die Einrichtung umfasst:
ein Anforderungsmodul (420), das konfiguriert ist, um eine Speicherzuweisungsanfrage zu erhalten, wobei die Speicherzuweisungsanfrage eine logische Adresse umfasst;
ein Entscheidungsmodul (430), das konfiguriert ist, um eine zuzuweisende Speicherressource aus den mehreren verschiedenen Arten von Speichermedien basierend auf einer Zuweisungsrichtlinie zu bestimmen, wobei die Zuweisungsrichtlinie angibt, die Speicherressource basierend auf physischen Attributen der mehreren verschiedenen Arten von Speichermedien zu bestimmen, und das physische Attribut mindestens eines der Folgenden umfasst:
eine Speicherkapazität, eine Zugriffslatenz, einen Preis oder eine Lebensdauer; und
ein Zuweisungsmodul (440), das konfiguriert ist, um die Speicherressource der logischen Adresse basierend auf der Zuweisungsrichtlinie zuzuweisen;
wobei die Einrichtung **dadurch gekennzeichnet ist, dass** das Zuweisungsmodul ferner konfiguriert ist, um die Speicherressource der logischen Adresse basierend auf einer voreingestellten Speicherzuweisungsgranularität zuzuweisen, wobei die voreingestellte Speicherzuweisungsgranularität größer als eine Seitengröße eines Speichermediums ist.

11. Einrichtung (400) nach Anspruch 10, wobei bei dem Bestimmen der zuzuweisenden Speicherressource aus den mehreren verschiedenen Arten von Speichermedien (220, 230, 250, 260) basierend auf der Zuweisungsrichtlinie das Entscheidungsmodul (430) speziell konfiguriert ist zum:
Bestimmen der Speicherressource aus den mehreren verschiedenen Arten von Speichermedien basierend auf einer Speichermedienart und den physischen Attributen der mehreren verschiedenen Arten von Speichermedien, auf die zugegriffen wird.

12. Einrichtung nach Anspruch 11, wobei die mehreren verschiedenen Arten von Speichermedien (220, 230, 250, 260) ein erstes Speichermedium und ein zweites Speichermedium umfassen, und falls eine Zugriffsgeschwindigkeit des ersten Speichermediums größer als eine Zugriffsgeschwindigkeit des zweiten Speichermediums ist, eine Zugriffslatenz des ersten Speichermediums kleiner als eine Zugriffslatenz des zweiten Speichermediums ist; und
bei dem Bestimmen der Speicherressource aus den mehreren verschiedenen Arten von Speichermedien basierend auf der Speichermedienart und den physischen Attributen der mehreren verschiedenen Arten von Speichermedien, auf die zugegriffen wird, das Entscheidungsmodul (430) speziell konfiguriert ist zum: Bestimmen der Speicherressource aus mehreren ersten Speichermedien basierend auf physischen Attributen der mehreren ersten Speichermedien, auf die zugegriffen wird.

13. Computerlesbares Speicherungsmedium (550), das Anweisungen speichert, die bei Ausführung durch eine Rechenvorrichtung, die einen Speicher und einen Prozessor umfasst, der mehreren verschiedenen Arten von Speichermedien (220, 230, 250, 260) zugeordnet ist, bewirken, dass die Rechenvorrichtung das Verfahren nach einem der Ansprüche 1 bis 9 durchführt.

## Revendications

1. Procédé de gestion de mémoire, dans lequel un système de mémoire hybride (200) comprend de multiples processeurs (210, 240) et de multiples types de supports de mémoire (220, 230, 250, 260) différents, un premier processeur est associé à au moins deux types de supports de mémoire différents, le premier processeur est un quelconque processeur parmi les multiples processeurs, et le procédé est réalisé par le premier processeur et comprend :
l'obtention d'une demande d'allocation de mémoire, dans lequel la demande d'allocation de mémoire comprend une adresse logique ;
la détermination d'une ressource mémoire à allouer parmi les multiples types de supports de mémoire différents sur la base d'une politique d'allocation, dans lequel la politique d'allocation indique de déterminer la ressource mémoire sur la base d'attributs physiques des multiples types de supports de mémoire différents, et l'attribut physique comprend au moins l'un parmi les éléments suivants : une capacité de mémoire, une latence d'accès, un coût ou une durée de vie en service ; et
l'allocation de la ressource mémoire à l'adresse logique sur la base de la politique d'allocation ;
le procédé étant **caractérisé en ce que** l'allocation de la ressource mémoire à l'adresse logique sur la base de la politique d'allocation comprend :
l'allocation de la ressource mémoire correspondant à l'adresse logique sur la base d'une granularité d'allocation de mémoire prédéfinie, dans lequel la granularité d'allocation de mémoire prédéfinie est supérieure à une taille de page d'un support de mémoire.

2. Procédé selon la revendication 1, dans lequel la détermination d'une ressource mémoire à allouer parmi les multiples types de supports de mémoire (220, 230, 250, 260) différents sur la base d'une politique d'allocation comprend :
la détermination de la ressource mémoire parmi les multiples types de supports de mémoire différents sur la base d'un type de support de mémoire et des attributs physiques des multiples types de supports de mémoire différents auxquels accède le premier processeur.

3. Procédé selon la revendication 2, dans lequel les multiples types de supports de mémoire (220, 230, 250, 260) différents comprennent un premier support de mémoire et un second support de mémoire, les supports de mémoire associés au premier processeur comprennent le premier support de mémoire et le second support de mémoire, et si une vitesse d'accès du premier support de mémoire est supérieure à une vitesse d'accès du second support de mémoire, une latence d'accès du premier support de mémoire est inférieure à une latence d'accès du second support de mémoire ; et
la détermination de la ressource mémoire parmi les multiples types de supports de mémoire différents sur la base d'un type de support de mémoire et des attributs physiques des multiples types de supports de mémoire différents auxquels accède le premier processeur comprend :
la détermination de la ressource mémoire parmi de premiers supports de mémoire associés aux multiples processeurs sur la base d'attributs physiques des premiers supports de mémoire qui sont associés aux multiples processeurs et auxquels accède le premier processeur.

4. Procédé selon la revendication 3, dans lequel la détermination de la ressource mémoire parmi de premiers supports de mémoire associés aux multiples processeurs (210, 240) sur la base d'attributs physiques des premiers supports de mémoire qui sont associés aux multiples processeurs et auxquels le premier processeur accède comprend :
la détermination du premier support de mémoire associé au premier processeur en tant que ressource mémoire ; et
si une ressource mémoire restante du premier support de mémoire associé au premier processeur ne satisfait pas à une exigence de ressource mémoire de la demande d'allocation de mémoire, la détermination d'un premier support de mémoire associé à un processeur adjacent au premier processeur en tant que ressource mémoire.

5. Procédé selon l'une quelconque des revendications 2 à 4, dans lequel la détermination de la ressource mémoire parmi les multiples types de supports de mémoire (220, 230, 250, 260) différents sur la base d'un type de support de mémoire et des attributs physiques des multiples types de supports de mémoire différents auxquels accède le premier processeur comprend :
si l'espace de stockage restant des premiers supports de mémoire associés aux multiples processeurs est inférieur à une granularité d'allocation de mémoire prédéfinie, la détermination de la ressource mémoire parmi de seconds supports de mémoire associés aux multiples processeurs sur la base d'attributs physiques des seconds supports de mémoire qui sont associés aux multiples processeurs et auxquels accède le premier processeur.

6. Procédé selon la revendication 5, dans lequel la détermination de la ressource mémoire parmi de seconds supports de mémoire associés aux multiples processeurs (210, 240) sur la base d'attributs physiques des seconds supports de mémoire qui sont associés aux multiples processeurs et auxquels le premier processeur accède comprend :
la détermination du second support de mémoire associé au premier processeur en tant que ressource mémoire ; et
si une ressource mémoire restante du second support de mémoire associé au premier processeur ne satisfait pas à une exigence de ressource mémoire de la demande d'allocation de mémoire, la détermination d'un second support de mémoire associé à un processeur adjacent au premier processeur en tant que ressource mémoire.

7. Procédé selon l'une quelconque des revendications 3 à 6, dans lequel le premier support de mémoire est une mémoire vive dynamique, DRAM (121), le second support de mémoire est une mémoire de classe de stockage, SCM (123), et la SCM comprend au moins l'un des éléments suivants : une mémoire à changement de phase, PCM, une mémoire vive magnétorésistive, MRAM, une mémoire vive résistive, RRAM, une mémoire vive ferroélectrique, FRAM, une mémoire NAND rapide ou une mémoire vive nano, NRAM.

8. Procédé selon l'une quelconque des revendications 1 à 7, dans lequel le procédé comprend en outre :
la libération de la ressource mémoire à la granularité d'allocation de mémoire prédéfinie sur la base d'une instruction de libération, dans lequel l'instruction de libération donne l'instruction de libérer la ressource mémoire allouée à une application exécutée par le premier processeur.

9. Procédé selon l'une quelconque des revendications 1 à 8, dans lequel le premier processeur est connecté aux multiples types de supports de mémoire (220, 230, 250, 260) différents par des interfaces prenant en charge une sémantique de mémoire, et les interfaces comprennent au moins une interface prenant en charge un compute express link, CXL, un protocole cache coherent interconnect for accelerators, CCIX, ou un unified bus, UB.

10. Appareil de gestion de mémoire (400), dans lequel un système de mémoire hybride (200) comprend de multiples types de supports de mémoire (220, 230, 250, 260) différents, et l'appareil comprend :
un module de demande (420), configuré pour obtenir une demande d'allocation de mémoire, dans lequel la demande d'allocation de mémoire comprend une adresse logique ;
un module de décision (430), configuré pour déterminer une ressource mémoire à allouer parmi les multiples types de supports de mémoire différents sur la base d'une politique d'allocation, dans lequel la politique d'allocation indique de déterminer la ressource mémoire sur la base d'attributs physiques des multiples types de supports de mémoire différents, et l'attribut physique comprend au moins l'un parmi les éléments suivants :
une capacité de mémoire, une latence d'accès, un coût ou une durée de vie en service ; et
un module d'allocation (440), configuré pour allouer la ressource mémoire à l'adresse logique sur la base de la politique d'allocation ;
l'appareil étant **caractérisé en ce que** le module d'allocation est en outre configuré pour allouer la ressource mémoire à l'adresse logique sur la base d'une granularité d'allocation de mémoire prédéfinie, dans lequel la granularité d'allocation de mémoire prédéfinie est supérieure à une taille de page d'un support de mémoire.

11. Appareil (400) selon la revendication 10, dans lequel, lors de la détermination de la ressource mémoire à allouer parmi les multiples types de supports de mémoire (220, 230, 250, 260) différents sur la base de la politique d'allocation, le module de décision (430) est spécifiquement configuré pour :
déterminer la ressource mémoire parmi les multiples types de supports de mémoire différents sur la base d'un type de support de mémoire et des attributs physiques des multiples types de supports de mémoire différents accédés.

12. Appareil selon la revendication 11, dans lequel les multiples types de supports de mémoire (220, 230, 250, 260) différents comprennent un premier support de mémoire et un second support de mémoire, et si une vitesse d'accès du premier support de mémoire est supérieure à une vitesse d'accès du second support de mémoire, une latence d'accès du premier support de mémoire est inférieure à une latence d'accès du second support de mémoire ; et
lors de la détermination de la ressource mémoire parmi les multiples types de supports de mémoire différents sur la base d'un type de support de mémoire et des attributs physiques des multiples types de supports de mémoire différents accédés, le module de décision (430) est spécifiquement configuré pour :
déterminer la ressource mémoire à partir de multiples premiers supports de mémoire sur la base d'attributs physiques des multiples premiers supports de mémoire accédés.

13. Support de stockage lisible par ordinateur (550) stockant des instructions qui, lorsqu'elles sont exécutées par un dispositif informatique comprenant une mémoire et un processeur associé à de multiples types de supports de mémoire (220, 230, 250, 260) différents, amènent le dispositif informatique à réaliser le procédé selon l'une quelconque des revendications 1 à 9.
